# EUROPEAN PATENT APPLICATION

(11) **EP 1 970 416 A2**
(43) Date of publication of application: **17.09.2008**
(21) Application number: 08100287.5
(22) Date of filing: 09.01.2008
(51) Int. Cl.: C09D 7/00, C09D 193/02, C09D 5/28

(54) **Paint peparation process and paint produced thereby**

(30) Priority: 08.03.2007 IT MI20070461
(71) Applicant: Farris, Pasquale, 08100 Nuoro (IT)
(72) Inventor: Farris, Pasquale, 08100 Nuoro (IT)
(74) Representative: Pesce, Michele

(57) **Abstract**

The paint preparation process consists of dissolving in ethyl alcohol a shellac of animal origin produced by cochineals, then adding a colorant and mixing.

## Description

The present invention relates to a paint preparation process and to a paint produced thereby.

In particular, the paint of the present invention is of a type suitable to give a characteristic appearance to those surfaces to which it is applied, with veining and/or blemishes enabling the following to be simulated:
- a marble surface such as to appreciate the elegance of this material on the most varied surfaces, such as wood, polystyrene, iron, etc.;
- an antique article surface, to obtain an effect giving the sensation of true age;
- a colorant, in particular for light woods.

Surfaces of the described type provided with characteristic veining or knots are currently produced by oil colours; specifically a primer layer is applied to the surface to be decorated, then a base layer is applied to the primer layer (to give colour to the surface).

Then on the surface treated in this manner the veining or blemishes are produced by brushing, usually using colours which differ from those with which the base layer was produced, at least by their tonality.

It is apparent that this method of producing "veined" surfaces requires considerable time and a high consumption of paints of different colours and/or colour tones.

The technical aim of the present invention is therefore to indicate a paint preparation process and a paint produced thereby by which the stated technical drawbacks of the known art are eliminated.

Within the scope of this technical aim an object of the invention is to indicate a process and a paint which enable even large area surfaces to be painted to include characteristic decorations with veining and/or blemishes quickly and in any event in a much shorter time than that required with traditional methods and products.

Another object of the invention is to indicate a process and paint which enable even large area surfaces to be painted to include characteristic decorations with veining and/or blemishes using paint quantities which are small compared with traditional methods and products; in particular according to the invention the use of numerous paints of different colours and/or colour tones is avoided.

The technical aim together with these and further objects are attained by a paint production process and a paint produced thereby in accordance with claim 1.

Other characteristics of the present invention are defined in the subsequent claims.

Further characteristics and advantages of the invention will be more apparent from the description of a preferred but non-exclusive embodiment of the process and paint of the invention, illustrated by way of non-limiting example in the accompanying drawings, in which:
Figure 1 shows an example of a wall painted with the paint of the invention; and
Figure 2 shows a table painted with the paint of the invention.

In a first example, the paint preparation process consists of dissolving a shellac, which is a resin of animal origin produced by cochineals (Homoptera), in ethyl alcohol then adding a colorant; this is then mixed at high frequency to obtain a homogeneous paint with the avoidance of component sedimentation which could cause colour tone variations. In particular, cochineals are insects of family of Coccidae.

The ethyl alcohol is of 94° denatured type, the shellac being of dewaxed type in flakes (before being mixed).

Specifically, the shellac is dissolved in ethyl alcohol in proportions of 1-2 litres of ethyl alcohol per 300-400 grams of shellac, preferably about 1.5 litres of ethyl alcohol per 350 grams of shellac.

The colorant used is a water colorant, for example colorants for colouring wall water paints or "water-soluble colour concentrates" are used; these colorants are added in a quantity less than 10% and preferably between 2 and 5% by weight of the prepared shellac.

In a second paint example, a further ethyl alcohol quantity can be added to the mixture prepared as described in the first example, this quantity being less than 45% and preferably 30-40% by weight of the prepared shellac; the paint of this second example is useful for achieving slower drying.

In a third paint example, liquid wax is added in a quantity less than 15% by weight of the prepared mixture, preferably 6-11 %; The addition of the liquid wax is useful to obtain a Byzantine effect (on plastered walls) or an antiquated effect (on pargeted walls).

Examples of the preparation of a paint of the invention are described below.

### EXAMPLE 1

A quantity of 350 grams of dewaxed shellac flakes is dissolved in 1.5 litres of 94° denatured ethyl alcohol; the compound is mixed until the shellac has completely dissolved in the alcohol.

A colorant or a mixture of colorants is added, consisting of about 3% of water-soluble colour concentrate (water paint colorant), for example brown, while continuing to mix.

The paint produced in this manner is ready for use, the chemical reactions which take place within the paint ensuring that on applying (for example by brush or roller) a layer of this paint on a surface, a characteristic decoration with veining and blemishes is obtained.

For example, the paint of the present example can be advantageously used to decorate an item of furniture to obtain a characteristic "veined" effect.

### EXAMPLE 2

A quantity of liquid wax (for floors) produced by the Saratoga company with the brand name "Gran Classe" can further be added to the mixture prepared as described in Example 1 in a quantity of 10% by weight of the mixture in preparation.

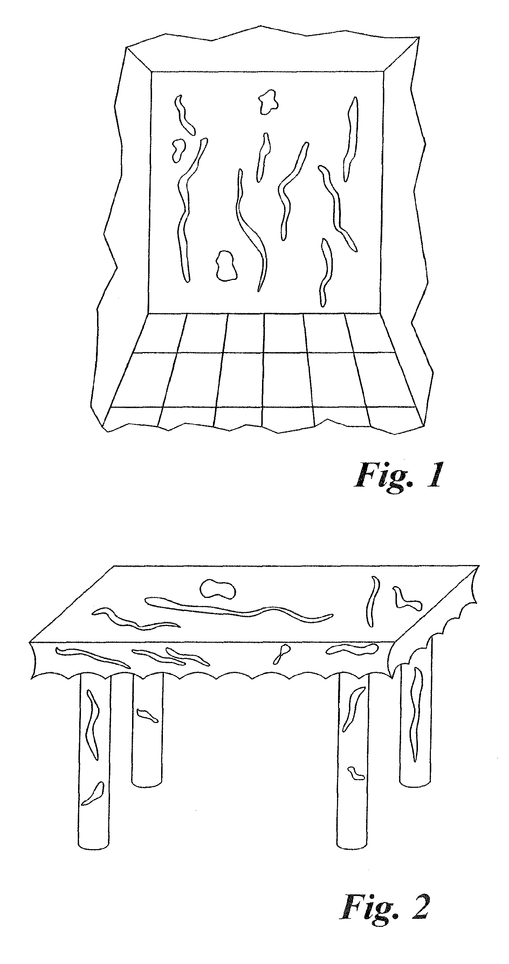

This paint can be conveniently used to decorate a wall (as shown in Figure 1) to obtain a characteristic "antiquated or Byzantine" effect.

Hence the paint of the invention can be used:
- for decoration to obtain a marble or antique effect, in this case the application being by brush;
- for colouring, in this case the application being by brush or spray (including on raw wood);
- for antiquating; in this case the application is by brush on painted but porous wood, or by roller on a wall whitened with semi-washable or washable wall paints.

In the first case (marble or antique effect) the application can be achieved with a single coat of paint.

The entire surface is dabbed irregularly and delicately using a brush soaked in paint to leave a non-homogeneous layer, then lightly passing over it where the product is in excess but still fresh. It is then allowed to dry well; if humidity is absent, one hour can be sufficient.

Steel wool of type 000 is then passed delicately and quickly over the surface to remove any roughness.

The surfaces are finished with a spray polyurethane coat of 40 gloss.

The same effect can be obtained with raw (non-painted) wood by carrying out the same operations.

Alternatively, after applying the paint of the invention, instead of allowing it to dry completely it can be left to set just for 1-2 minutes, then the application operation be repeated by dabbing while the underlying product is still fresh; in this manner two or more coats of paint can be applied.

The surfaces are then finished as described.

Instead, after applying a first coat of paint and allowing it to set for 1-2 minutes, just ethyl alcohol could be applied, or alcohol and colour in a single mixture (colour dilution 3-4%) or just shellac or a paint according to the invention but of different coloration.

In the second case (colorant) the application can be efected as a single coat of paint directly on the wood by a brush or by spraying.

In the third case (antiquating) the application can be achieved with a single coat of paint on a wall already whitened with semi-washable or washable paint with the aid of a roller, but without applying over the regions where the product is already dry. In this manner a high application rate is achieved with a small quantity of paint used. For a greater shine and resistance to scratching, a liquid wax can be added in a quantity of 10% by weight of the mixture under preparation.

In painting walls with paint containing liquid wax to obtain a "Byzantine" effect, application is by a brush as already described (i.e. dabbing) after preparing the wall to be treated by painting it with water-based primer,for example "Cementite" produced by Tassani, or with a transparent paint.

For coloration, pure aneline or aneline in water can also be used.

The paint of the invention can be conveniently used on very different materials such as raw wood, lacquered or painted wood, plywood, MDF, painted iron or metal sheet, glass, paper sheets, coloured cardboard. polystyrene, premixed or traditional wall, plastered wall, plaster board, glazed ceramic and plastic (with the exception of nylon), terracotta, etc. It can also be used to create drawings by virtue of the chiaroscuro effect, using a thin tipped brush and alcohol.

Preferably the paint of the invention is used together with a finish by spraying semi-glossy polyurethane varnish (40 gloss) which provides a shiny appearance.

Other finishes can however be used, such as nitro, synthetic, acrylic, water and wax finishes. If used as an antiquator with wax, a finish is not required.

In addition the paint of the invention can be "cancelled" with ethyl alcohol.

Finally, the paint is advantageously non-toxic.

## Claims

1. A paint preparation process, **characterised by** consisting of dissolving in ethyl alcohol a shellac of animal origin produced by cochineals, then adding a colorant and mixing.

2. A process as claimed in the preceding claim, **characterised in that** the ethyl alcohol is of 94° denatured type.

3. A process as claimed in one or more of the preceding claims, **characterised in that** the shellac is of dewaxed type in flakes.

4. A process as claimed in one or more of the preceding claims, **characterised by** dissolving the shellac in ethyl alcohol in proportions of 1-2 litres of ethyl alcohol per 300-400 grams of shellac, and preferably about 1.5 litres of ethyl alcohol per 350 grams of shellac.

5. A process as claimed in one or more of the preceding claims, **characterised in that** the colorant is a water colorant.

6. A process as claimed in one or more of the preceding claims, **characterised in that** the colorant is a pure aneline or water-based aneline colorant.

7. A process as claimed in one or more of the preceding claims, **characterised in that** the colorant is added in a quantity less than 10% and preferably between 2-5% by weight of the prepared shellac.

8. A process as claimed in one or more of the preceding claims, **characterised by** adding a further ethyl alcohol quantity in a proportion less than 45% and preferably between 30-40% by weight of the prepared shellac.

9. A process as claimed in one or more of the preceding claims, **characterised by** adding liquid wax in a quantity less than 15% by weight of the prepared mixture, and preferably between 6-11%.

10. Paint, **characterised by** being produced by a process in accordance with one or more of the preceding claims.
